# EUROPEAN PATENT APPLICATION

(11) **EP 4 385 766 A1**
(43) Date of publication of application: **19.06.2024**
(21) Application number: 23214502.9
(22) Date of filing: 06.12.2023
(51) Int. Cl.: B60C 23/04, B60C 23/00

(54) **AUTO-LOCATION OF TIRE SENSOR BY VEHICLE WHEEL POSITION**

(30) Priority: 12.12.2022 US 202263386930 P; 28.11.2023 US 202318520841
(71) Applicant: The Goodyear Tire & Rubber Company, Akron, OH 44316 (US)
(72) Inventor: MORRIS, Brian Richard, Canton, 44721 (US)
(74) Representative: Kutsch, Bernd

(57) **Abstract**

A system, a method and a computer readable medium is disclosed. The system comprises at least one computing device comprising at least one processor; and at least one memory comprising instructions, when executed, cause the at least one computing device to at least: receive, by a vehicle management service, timestamped tire acceleration values for a set of tire sensor devices that are assigned to a vehicle that is managed by a vehicle management service, wherein a respective tire sensor device provides a tire-specific subset of the timestamped tire acceleration values; identify, by the vehicle management service, at least one vehicle configuration parameter that defines a number of rear axles and a number of tires or wheels on each side of a respective axle; input, by the vehicle management service, the at least one vehicle configuration parameter and the timestamped tire acceleration values into a tire position classification process; and assign, by the vehicle management service, an axle position and a vehicle side position to the respective tire sensor device based at least in part on an output from the tire position classification process.

## Description

### BACKGROUND

Tires include various conditions that are beneficial to monitor and estimate as the tires age. Such conditions include tire wear, tire pressure, and tire mismatch of dual tires. Tire wear plays an important role in vehicle factors such as safety, reliability, and performance. As the tire wears, the tread loses material and directly affects such vehicle factors. A tire and/or structures proximate the tire can include a sensor or set of sensors that can detect parameters in association with the tire. As a result, it is desirable to identify tire sensor locations, for example, to associate a tire with a wheel or wheel position. Multi-axle configurations can make this operation difficult.

One approach to the identification of tire sensor position could include directional or proximity detection relative to a known location. However, this type of identification can fail to distinguish between closely placed tires. This can affect both dual or multiple-adjacent tire configurations as well as multi-axle configurations. Another approach could be to manually identify the location of each tire and sensor. However, this can be time consuming and can also be subject to user error. Moreover, tires and wheels can be rotated or moved, requiring another manual assessment of tire location. As a result, there is a need in the art for a method that accurately and reliably identifies tire location.

### SUMMARY OF THE INVENTION

The invention relates to a system in accordance with claim 1, to a method in accordance with claim 6, and to a computer readable medium in accordance with claim 11.

Dependent claims refer to preferred embodiments of the invention.

### BRIEF DESCRIPTION OF THE DRAWINGS

Aspects of the present disclosure can be better understood with reference to the following drawings. It is noted that the elements in the drawings are not necessarily drawn to scale, with emphasis instead being placed upon clearly illustrating the principles of the embodiments. In the drawings, like reference numerals designate like or corresponding, but not necessarily the same, elements throughout the several views.
FIG. 1 illustrates an example of a tire sensor position detection system, according to various aspects of the embodiments of the present disclosure.
FIGS. 2A and 2B illustrate an example of the operational principles of a tandem set of axles monitored by the tire sensor position detection system, according to various aspects of the embodiments of the present disclosure.
FIGS. 3A and 3B illustrate an example of the operational principles of axles monitored by the tire sensor position detection system in a right hand turn, according to various aspects of the embodiments of the present disclosure.
FIGS. 4A and 4B illustrate examples of sensor values used by the tire sensor position detection system, according to various aspects of the embodiments of the present disclosure.
FIG. 5 Illustrates a further example of sensor values used by the tire sensor position detection system, according to various aspects of the embodiments of the present disclosure.
FIG. 6 is a flowchart that illustrates functionalities performed by the tire sensor position detection system, according to various aspects of the embodiments of the present disclosure.
FIG. 7 is another flowchart that illustrates additional functionalities performed by the tire sensor position detection system, according to various aspects of the embodiments of the present disclosure.
FIG. 8 illustrates an example computing device for the tire sensor position detection system, according to various aspects of the embodiments of the present disclosure.

### DETAILED DESCRIPTION OF PREFERRED EMBODIMENTS OF THE INVENTION

As outlined above, tire monitoring plays an important role in vehicle factors such as safety, reliability, and performance. A tire can include a sensor or set of sensors that can detect parameters in association with the tire. As a result, it is desirable to identify tire sensor locations, for example, to associate a tire with a wheel or wheel position. However, existing approaches can be time consuming and can also be subject to user error. As a result, there is a need in the art for a method that accurately and reliably identifies tire location.

The present disclosure describes mechanisms that enable automatic location of tire sensors according to their wheel positions, for example, on tractors, trailers or straight trucks. The system can identify tires and locations of tires that have been replaced or rotated. From a maintenance perspective, if a tire sensor signals an alert, the wheel position of that tire/sensor alert can be provided to maintenance associates. Tire locations and conditions can then be accurately communicated to vehicle control systems.

The present disclosure further describes mechanisms that can differentiate between inner tires and outer tires of rolling dual tires on tractors, trailers or straight trucks. The systems and methods described can receive sensor parameter values indicating that tire cavity temperature is increased or higher relative to tire free rolling temperature, for example, when brakes are applied. The system can also identify the inner tires based on sensor indications that indicate higher temperature relative to other (outer) tires under braking conditions. This information can contribute to auto-locating and associating tires and wheels to wheel positions by identifying which tires are inner tires and which are outer tires. This temperature relationship holds for tire, wheel, and valve stem mounted sensors.

Tire sensors can detect an increase in tire cavity temperature. Wheel mounted sensors can detect an increase in wheel surface temperature and tire cavity temperature. Valve stem inner tire sensors can report an increase in temperature due to the sensor's close positioning to the brake drum or disc. Based on the predetermined knowledge of the vehicle configuration count for duals, this approach can categorize one or more unassigned or missing sensors as inner or outer tires or wheels. Further confirmation of inner and outer positions can be made by considering for equivalent inflation conditions, inner tires carry more load than outer tires. For air suspensions, axle loads can be expected to be equivalent allowing cross checking of sensed temperatures between wheel positions to further confirm inner vs outer positions for dual tire setups. Comparative temperatures for inner position tires/wheels can identify potential brake adjustment issues as well as a check for brake balance. For example, this can enable identification when a driver may be using or overusing trailer brakes on a leased trailer.

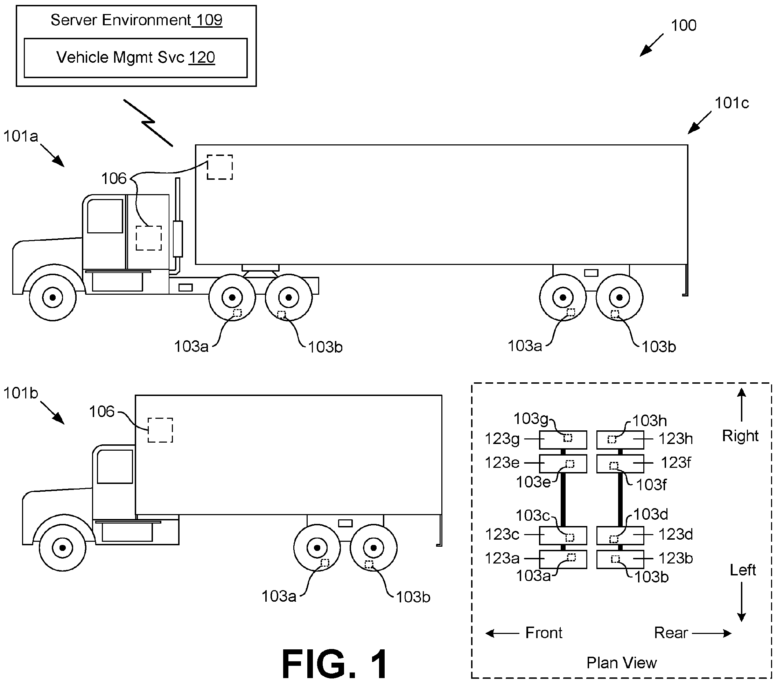

FIG. 1 shows a tire sensor position detection system 100. The tire sensor position detection system 100 can include a vehicle 101a or 101b (i.e. a vehicle 101), tire sensors 103ah (collectively, "the tire sensors 103," individually "a tire sensor device 103"), an edge device 106 such as a gateway or another device deployed to a vehicle 101, and a server environment 109. The tire sensors 103, the edge device 106, and the server environment 109 can communicate with one another through one or more networks. In some examples, the edge device 106 can generate, facilitate, or maintain a network to which the tire sensor devices 103 connect.

The networks can include local area networks (LANs), wide area networks (WANs), and other networks. These networks can include wired or wireless components or a combination thereof. Wired networks can include Ethernet networks, cable networks, fiber optic networks, and telephone networks such as dial-up, digital subscriber line (DSL), and integrated services digital network (ISDN) networks. Wireless networks can include cellular networks, satellite networks, Institute of Electrical and Electronic Engineers (IEEE) 802.11 wireless networks (i.e., WI-FI^{®}), BLUETOOTH^{®} networks, microwave transmission networks, as well as other networks relying on radio broadcasts. The networks can also include a combination of two or more networks. Examples of networks can include the Internet, intranets, extranets, virtual private networks (VPNs), and similar networks.

A vehicle 101 can include a semi-type truck 101a, a straight truck 101b, a trailer vehicle 101c, as well as other types of vehicles. A trailer vehicle 101c can be considered an unpowered road vehicle, while the vehicles 101 can be powered vehicles. As a result, a trailer vehicle 101c can also be considered a vehicle 101 for the purposes of the discussion herein. Vehicles 101 can include multiple rear axles, and each axle can include multiple adjacent wheels and tires.

A tire sensor device 103 can refer to a device that includes one or more sensors that respectively identify values corresponding to multiple different parameters. A tire sensor device 103 can include one or more sensors including motion sensors, environment sensors, and position sensors. A tire sensor device 103 can also include a computing device and a memory as well as network communications components. Generally, a tire sensor device 103 can communicate wirelessly with the edge or edge device 106. A tire sensor device 103 can generally be connected, integrated, or affixed to a tire of a vehicle 101.

A tire can include multiple separate tire sensor devices 103, such as one tire sensor device 103 at least partially on an interior of the tire or tire cavity, which can have a set of sensors capable of measuring conditions within the tire; and a second tire sensor device 103 at least partially on an exterior of the tire, which can have a set of sensors capable of measuring conditions outside of the tire. This can be used for comparison of conditions or parameters between the interior and exterior of the tire. This can be particularly useful for comparison of environmental factors, such as temperature, external air pressure, internal tire pressure, light, humidity. However, force, vibration, or acceleration, and position sensor parameters, and any parameters of any type of parameters can be compared for validation of parameters and contrast of parameters.

The motion sensors can detect motion parameters such as acceleration forces and rotational forces along one or more axles. For example, a motion sensor can include an accelerometer or other force, vibration, or acceleration detection device.

Environment sensors can detect environmental parameters such as temperature, external air pressure, internal tire pressure, light, humidity, and so on. For example, the environmental sensors can include barometers, photometers, and thermometers.

The position sensors can detect location and orientation parameters. These sensors can identify global or geographical location and orientation. The position sensors can include global navigation satellite systems (GNSS), global positioning systems (GPS), magnetometers, and others.

The edge device 106 can include or access a sensor set that is separate from the tire sensor devices 103. This can include a Controller Area Network (CAN) bus based sensor set of the vehicle 101, or another sensor device with one or more sensors corresponding to the vehicle 101 overall rather than a particular tire. The overall vehicle 101 sensor device can also include separate motion sensors and environment sensors. Since the tire sensor devices 103 can be affixed to a tire of a vehicle 101, the motion, environment, and position parameters detected can be tire-specific to the particular tire. These tire-specific values of the tire sensor devices 103 can differ from the general or overall state of the vehicle 101. As a result, sensors that are separate from the tire sensor devices 103 can be used when generalized vehicle information is desired. However, the tire agnostic or other general vehicle sensor device of the edge device 106 (or other general vehicle sensor) can be used to identify whether a vehicle 101 is in a low speed and/or small radius turn, and a direction of the turn. This can include a turn under a predetermined threshold velocity and under a predetermined threshold turning radius, as identified using location-based systems, such as GNSS, GPS and other position detection sensors, and/or using vehicle parameters obtained through the CAN bus or other electric vehicle system. In addition, other sensors may be employed to identify whether a vehicle 101 is braking or not accelerating, such as sensors that identify brake pedal placement and accelerator position, and a direction of a turn, such as sensors that identify the steering wheel angle.

The server environment 109 can include, for example, a hardware computing device or any other system providing computing capability. Alternatively, the server environment 109 can include one or more computing devices that are arranged, for example, in one or more server banks, computer banks, computing clusters, or other arrangements. The server environment 109 can include a grid computing resource or any other distributed computing arrangement. The computing devices can be located in a single installation or can be distributed among many different geographical locations.

Various applications can be executed on the server environment 109. For example, a tire, wheel, and/or vehicle management service 120 can be executed by the server environment 109. Other applications, services, processes, systems, engines, or functionality not discussed in detail herein may also be executed or implemented by the server environment 109.

The server environment 109 can include or be operated as one or more virtualized computer instances. For purposes of convenience, the server environment 109 is referred to herein as singular. Even though the server environment 109 is referred to in the singular, it is understood that a plurality of server environments 109 can be employed in the various arrangements as described above. As the server environment 109 communicates with the edge device 106 and the tire sensor devices 103 directly or indirectly, the server environment 109 can be described as a remote server environment 109 or a cloud server environment 109.

The server environment 109 can include a data store. The data store can include memory of the server environment 109, mass storage resources of the server environment 109, or any other storage resources on which data can be stored by the server environment 109. The data store can include memory of various hosts in some examples. In some examples, the data store can include one or more relational databases, object-oriented databases, hierarchical databases, hash tables or similar key-value data stores, as well as other data storage applications or data structures. The data stored in the data store, for example, can be associated with the operation of the various services or functional entities described below.

The vehicle management service 120 can register and track tire sensors 103. A set of tire sensor devices 103 can be registered and pre-associated with a particular enterprise as well as a vehicle 101 or a trailer vehicle 101c. Each of the vehicles 101 can be associated with a configuration that can be user-selected through an interface of the vehicle management service 120. The vehicle configuration can indicate information about the vehicle 101. The vehicle configuration can include a specified number of rear axles, as well as a specified number of adjacent tires on each side of each rear axle. The vehicle configuration can specify tire slots 123. The tire slots 123 can also be considered wheel slots. Each tire slot 123 can correspond to a tire position where a tire and one or more tire sensors 103 can be assigned.

The vehicle management service 120 can provide a user interface that manages and tracks various information about vehicles 101. The vehicles and trailers can be associated with particular enterprises such as trucking companies and services, individual contractors or employees that operate and use the vehicles 101, and so on. A vehicle can be registered in association with a particular enterprise. Administrators of the enterprise, as well as administrators of the vehicle management service 120 can log in and view user interfaces through which vehicles 101, and their associated components such as wheels, tires, and brakes can be managed. The vehicle management service 120 can also include a distributed application or set of applications that includes executables that are executed using the edge device 106. Any of the functionalities described for the vehicle management service 120 can be executed using the server environment 109, an edge device 106, or both.

Tire sensor devices 103 deployed and associated with a particular vehicle may initially be unassociated with a tire slot 123. However, the components of the tire sensor position detection system 100 can work in concert to automatically associate various tire sensor devices 103 with corresponding tire slots 123. Instructions executed by the edge device 106 and the server environment 109 can execute instructions including predetermined rules or threshold-based processes as well as machine learning processes that automatically associate various tire sensor devices 103 with corresponding tire slots 123. Tire slots 123 for dual axle dual tire setups can correspond to a front or rear axle, vehicle left or right side, and inner or outer positions. For example, the tire slot 123a can correspond to a front axle, left side, outer tire or wheel; tire slot 123b can correspond to a rear axle, left side, outer tire or wheel; tire slot 123c can correspond to a front axle, left side, inner tire or wheel; tire slot 123d can correspond to a rear axle, left side, inner tire or wheel, and so on.

In the example shown, the tire slots 123 can include tire slots 123a-123h. The tire sensor position detection system 100 can automatically assign the tire sensor device 103a to tire slot 123a; tire sensor device 103b can be assigned to tire slot 123b; tire sensor device 103c can be assigned to tire slot 123c; tire sensor device 103d can be assigned to tire slot 123d; tire sensor device 103e can be assigned to tire slot 123e, and so on. As a result, the tire sensors 103 for dual axle dual tire setups can correspond to front or rear axle position, left or right vehicle side position, and inner or outer dual position.

In order to automatically associate a tire sensor device 103 with the appropriate tire slot 123, the tire sensor position detection system 100 can utilize the predetermined vehicle configuration, along with lateral force data, temperature data, and other data detected using the tire sensor devices 103 and sensors of the edge device 106 (or general vehicle sensors that are also in communication with the edge device 106). Generally, the lateral force data and vertical force data can be used to identify axle position as well as vehicle side, while the temperature data can be used to identify inner or outer position. The lateral force data and vertical force data can include the force data that corresponds to a low speed and small radius turn.

A low speed turn can correspond to a turn that is under a predetermined threshold speed value, which can be a vehicle-specific predetermined threshold speed value. In some examples, a low speed and/or small radius turn can refer to a turn that has a turn radius such as an effective turn radius that is shorter than a wheel base of a vehicle 101. A wheel base for a vehicle 101a or 101b can refer to a distance from a turning axle or front wheel to one of the axles, a midpoint or a centerline between the axles, or another predetermined point between the axles. A wheel base for a trailer vehicle 101c such as a semi trailer can include a distance of an axis of a semi trailer fifth wheel king pin to one of the axles, a midpoint or a centerline between the axles, or another predetermined point between the axles. Thus, the wheel base and low speed turn threshold calculation and threshold value information can be stored as part of the vehicle configuration by the server environment 109 and/or the edge device 106.

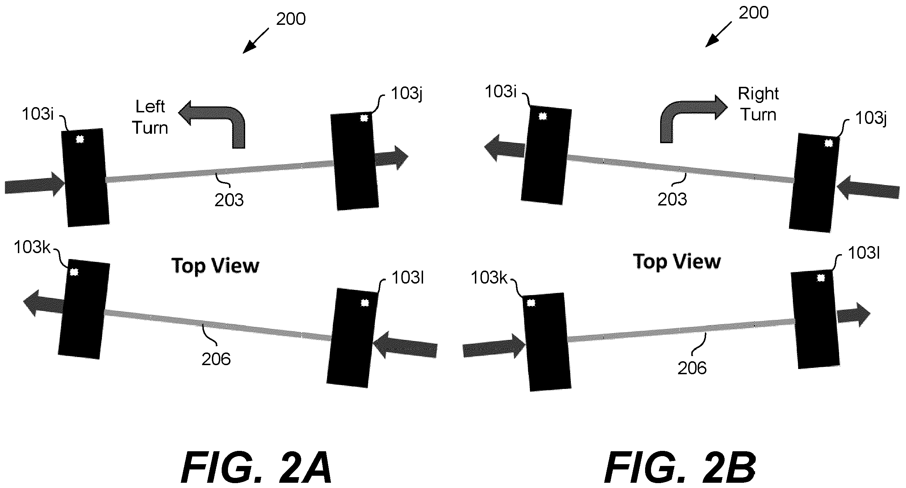

FIG. 2A shows an example of the operation of a tandem set of axles 200 at the rear of a vehicle 101 that is monitored and managed by the tire sensor position detection system 100. FIG. 2A shows an example of the operation of the tandem set of axles 200 in a low speed left turn.

The tandem set of axles 200 can include a front axle 203 and a rear axle 206. While the tandem set of axles 200 can as a whole be positioned at the rear of a vehicle 101, the front axle 203 can refer to an axle that is closer to a front of the vehicle 101; the rear axle 206 can refer to an axle that is closer to a rear of the vehicle 101. In this example, the front axle 203 can have a single tire on each side, and the rear axle 206 can have a single tire on each side. Each tire can have a corresponding tire sensor device 103. For example, the left side tire of the front axle 203 can have a tire sensor device 103i, and the right side tire of the front axle 203 can have a tire sensor device 103j. The left side tire of the rear axle 206 can have a tire sensor device 103k, and the right side tire of the rear axle 206 can have a tire sensor device 103l.

Generally, when a vehicle makes a low speed turn, the front axle 203 and the rear axle 206 can turn in opposite directions with the front axle 203 steering into the turn and the rear axle 206 steering out of the turn. Steering into a turn can indicate that an axle has rotated towards or with a direction of the vehicle turn. Steering out of a turn can indicate that an axle has rotated away from or opposite of a direction of the vehicle turn. When a vehicle 101 makes a low speed left turn, the front axle 203 rotates to the left, in a same direction or matching direction with the turn. By contrast, the rear axle 206 rotates to the right, in an opposite direction as the turn.

The lateral forces detected by sensor devices 103i-103l on the various tires are shown as arrows adjacent to a respective one of the tires. The tire sensor device 103i can indicate a lateral force to the right, opposite of the left hand direction of the turn. The tire sensor device 103j can also indicate a smaller lateral force to the right, opposite of the left hand direction of the turn. The lateral force detected by the tire sensor device 103j can be smaller than the lateral force detected by tire sensor device 103i.

The tire sensor device 103k can indicate a lateral force to the left, in the same direction as the left hand direction of the turn. The tire sensor device 103l can also indicate a larger lateral force to the left, in the same direction as the left hand direction of the turn. The lateral force detected by the tire sensor device 103l can be larger than the lateral force detected by tire sensor device 103k.

The executable components of the tire sensor position detection system 100, including instructions executed by the server environment 109 and the edge device 106, can use the knowledge of the direction of the small radius turn at low speed, in combination with the direction and magnitude of forces identified using the tire sensor devices 103 in order to determine an axle position (e.g., front/rear) and vehicle side (e.g., left/right) for each of the tire sensor devices 103i-103l.

FIG. 2B shows another example of the operation of the tandem set of axles 200 at the rear of the vehicle 101 that is monitored and managed by the tire sensor position detection system 100. FIG. 2B shows an example of the operation of the tandem set of axles 200 in a right turn.

As in FIG. 2A, the tandem set of axles 200 can include a front axle 203 and a rear axle 206. While the tandem set of axles 200 can as a whole be positioned at the rear of a vehicle 101, the front axle 203 can refer to an axle that is closer to a front of the vehicle 101; the rear axle 206 can refer to an axle that is closer to a rear of the vehicle 101.

When the vehicle 101 makes a low speed right turn, the front axle 203 rotates to the right, in a same direction or matching direction with the turn. By contrast, the rear axle 206 rotates to the left, in an opposite direction from the turn.

The lateral forces detected by sensor devices 103i-103l on the various tires are shown as arrows adjacent to a respective one of the tires. The tire sensor device 103i can indicate a lateral force to the left, opposite of the right hand direction of the turn. The tire sensor device 103j can also indicate a larger lateral force to the left, opposite of the right hand direction of the turn. The lateral force detected by the tire sensor device 103j can be larger than the lateral force detected by tire sensor device 103i.

The tire sensor device 103k can indicate a lateral force to the right, in the same direction as the right hand direction of the turn. The tire sensor device 103l can also indicate a smaller lateral force to the right, in the same direction as the right hand direction of the turn. The lateral force detected by the tire sensor device 103l can be smaller than the lateral force detected by tire sensor device 103k.

The executable components of the tire sensor position detection system 100, including instructions executed by the server environment 109 and the edge device 106, can use the knowledge of the direction of the small radius turn at low speed, in combination with the direction and magnitude of forces identified using the tire sensor devices 103 in order to determine an axle position (e.g., front/rear) and vehicle side (e.g., left/right) for each of the tire sensor devices 103i-103l.

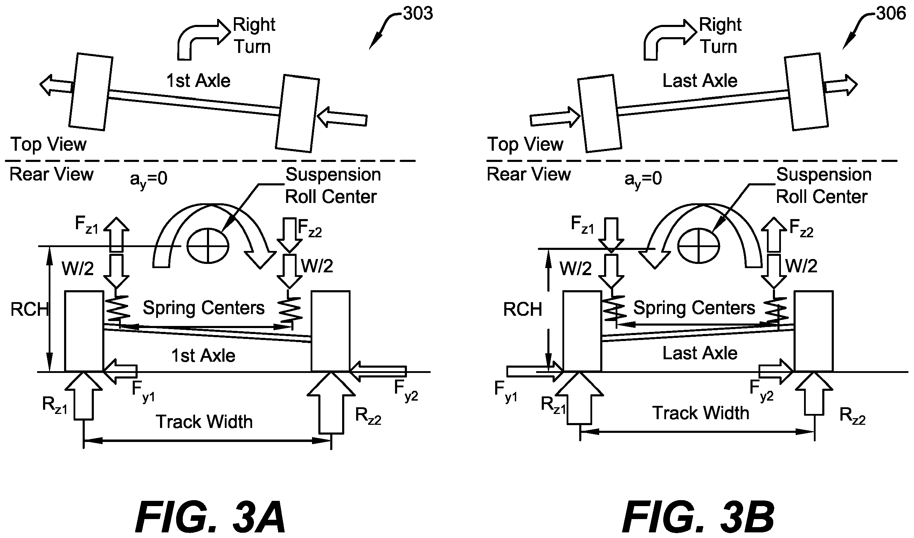

FIG. 3A provides operational principles of a first axle or front axle 303 of a tandem set of axles 200 as it is monitored by the tire sensor position detection system 100 in a right hand turn. This figure includes a top view and a rear view of the first or front axle 303. The suspension roll center of the front axle 303 is shown along with a curved arrow that shows a direction of the rotation of the front axle 303 around the suspension roll center. The suspension roll center of the front axle 303 is at a height RCH from the ground. The tire sensor devices 103 in the respective tires can detect that the right hand tire of the front axle 303 experiences greater vertical or z-direction force R_{z2} as compared to the vertical or z-direction force R_{z1} of the left hand tire of the front axle 303.

The tire sensor devices 103 in the respective tires can detect that the right hand tire of the front axle 303 experiences greater horizontal, lateral, or y-direction force F_{y2} as compared to the horizontal, lateral, or y-direction force F_{y1} of the left hand tire of the front axle 303. This effect is shown to be a result in relation to the substantially equal distribution of vehicle weight W, in combination of the forces F_{z1} and F_{z2} from the rolling of the front axle 303.

For three axle trailers or other vehicles 101 with a front, center, and rear axle, the tire sensor position detection system 100 can identify that the vehicle configuration includes a three axle set. The tire sensor position detection system 100 can determine whether the front axle is lifted or loaded using tire cavity temperature and pressure measurements. For example, low temperature and low pressure below respective thresholds and/or in relation to tires of other axles can indicate whether the front axle of a 3 axle system is lifted. If lifted, the remaining axles can be treated as a tandem set of axles 200. In other words, the center or middle axle can be identified to correspond to the forces discussed and detected for the front axle 303 shown. The tire sensor devices 103 corresponding to the actual front axle of the three axle vehicle can be inferred as the one with low pressure, and can also correspond to lower forces generally.

FIG. 3B provides operational principles of a last axle or rear axle 306 of a tandem set of axles 200 as it is monitored by the tire sensor position detection system 100 in a right hand turn. This figure includes a top view and a rear view of the last or rear axle 306. The suspension roll center of the rear axle 306 is shown along with a curved arrow that shows a direction of the rotation of the rear axle 306 around the suspension roll center. The suspension roll center of the rear axle 306 is at a height RCH from the ground. The tire sensor devices 103 in the respective tires can detect that the right hand tire of the rear axle 306 experiences lesser vertical or z-direction force R_{z2} as compared to the vertical or z-direction force R_{z1} of the left hand tire of the front axle 303.

The tire sensor devices 103 in the respective tires can detect that the right hand tire of the rear axle 306 experiences lesser horizontal, lateral, or y-direction force F_{y2} as compared to the horizontal, lateral, or y-direction force F_{y1} of the left hand tire of the rear axle 306. This effect is shown to be a result in relation to the substantially equal distribution of vehicle weight W, in combination of the forces F_{z1} and F_{z2} from the rolling of the rear axle 306.

For three axle trailers or other vehicles 101 with a front, center, and rear axle, the tire sensor position detection system 100 can identify that the vehicle configuration includes a three axle set. The tire sensor position detection system 100 can determine whether the front axle is lifted or loaded using tire cavity temperature and pressure measurements. For example, low temperature and low pressure below respective thresholds and/or in relation to tires of other axles can indicate whether the actual front axle of a 3 axle system is lifted. If lifted, the remaining axles can be treated as a tandem set of axles 200. In other words, the center or middle axle can be identified to correspond to the forces discussed and detected for the front axle 303. The rear axle 303 can be unchanged in the analysis. The tire sensor devices 103 corresponding to the actual front axle of the three axle vehicle can be inferred as the one with low pressure, and can also correspond to lower forces generally.

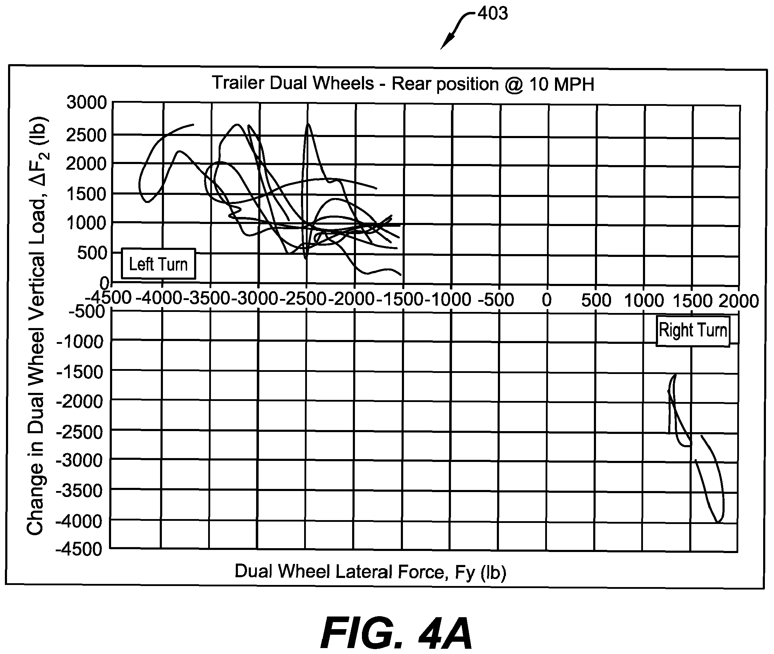

FIG. 4A shows a graph 403 that provides an example of sensor measurements detected by tire sensor devices 103 and used by the tire sensor position detection system 100 to determine if a particular tire sensor device 103 is on a front axle or a rear axle. In this case, the measurements correspond to a right rear tire position for a trailer or unpowered vehicle 101. The trailer vehicle 101 can be determined to be in a small turning radius turn at a low speed, which in this instance can be a left and/or right turn at ten miles per hour or another threshold as discussed. These example measurements confirm that unpowered axles operate according to the principles described with respect to FIGS. 3A and 3B. In any case, the right rear tire sensor values for lateral and vertical force can be identified to be as shown. This example includes multiple examples of a left hand turn and two examples of a right hand turn.

The components of the tire sensor position detection system 100 including the vehicle management service 120 or instructions executed by the edge device 106 or vehicle-based computing device can determine that the vehicle is in a left hand turn, and can analyze the graph of force measurements shown along with measurements of other sensors on other tires to identify their positions.

In this case, when the components of the tire sensor position detection system 100 identify a left hand turn, a right rear tire sensor can indicate an average, median, maximum, minimum or other statistical measure over a duration of a left hand turn, shows a change in wheel vertical load ΔF_{z} that is increased relative to an overall statistical measure or a "straight driving" statistical measure of wheel vertical load or change in wheel vertical load; also during a left hand turn, a statistical measure of the lateral force F_{y} can be identified to be in a predetermined lateral direction from neutral.

When the components of the tire sensor position detection system 100 identify a right hand turn, a right rear tire sensor can indicate an average, median, maximum, minimum or other statistical measure over a duration of a right hand turn, shows a change in wheel vertical load ΔF_{z} that is decreased relative to an overall statistical measure or a "straight driving" statistical measure of wheel vertical load or change in wheel vertical load; also, during a right hand turn, a statistical measure of the lateral force F_{y} can be identified to be in a predetermined lateral direction from neutral that is opposite of the predetermined lateral direction for the left hand turn.

These can be analyzed in a number of ways to identify that the tire is a right rear tire. The components of the tire sensor position detection system 100 can identify that a statistical measure such as average position (or other measure) of the two dimensional plot of change in wheel vertical load vs lateral load corresponds to an upper left quadrant for a left hand turn; but the two dimensional plot of change in wheel vertical load vs lateral load corresponds to a lower right quadrant for a right hand turn.

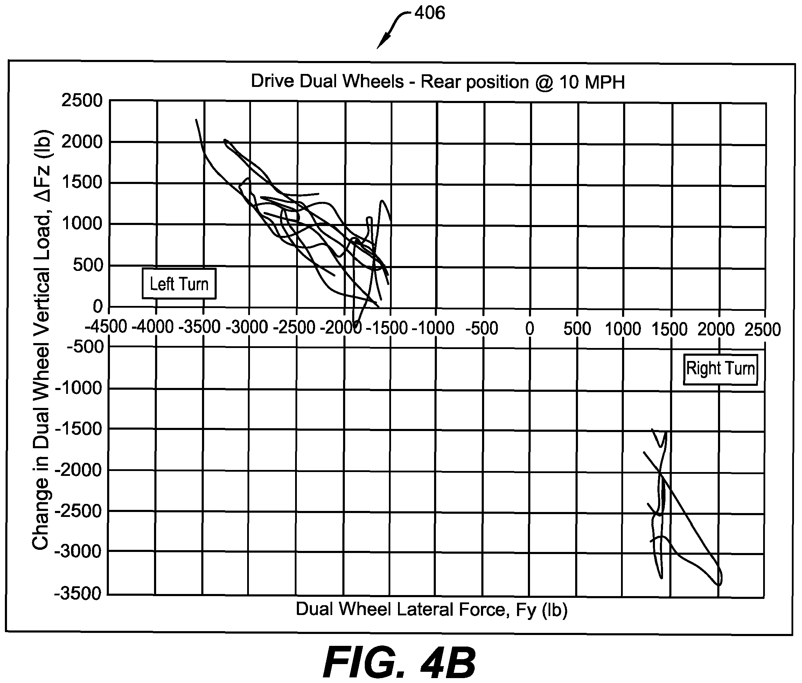

FIG. 4B shows a graph 406 that provides an example of sensor measurements detected by tire sensor devices 103 and used by the tire sensor position detection system 100 to determine if a particular tire sensor device 103 is on a front axle or a rear axle. In this case, the measurements correspond to a right rear tire position for a vehicle 101 with a powered set of rear axles. One or more of the axles can be powered. The vehicle 101 can be determined to be in a small turning radius turn at a low speed, which in this instance can be a left and/or right turn at ten miles per hour or another threshold as discussed. These example measurements confirm that powered axles operate according to the principles described with respect to FIGS. 3A and 3B. In any case, the right rear tire sensor values for lateral and vertical force can be identified to be as shown. This example includes multiple examples of a left hand turn and two examples of a right hand turn.

The components of the tire sensor position detection system 100 including the vehicle management service 120 or instructions executed by the edge device 106 or vehicle-based computing device can determine that the vehicle is in a left hand turn, and can analyze the graph of force measurements shown along with measurements of other sensors on other tires to identify their positions.

In this case, when the components of the tire sensor position detection system 100 identify a left hand turn, a right rear tire sensor can indicate an average, median, maximum, minimum or other statistical measure over a duration of a left hand turn, shows a change in wheel vertical load ΔF_{z} that is increased relative to an overall statistical measure or a "straight driving" statistical measure of wheel vertical load or change in wheel vertical load; also during a left hand turn, a statistical measure of the lateral force F_{y} can be identified to be in a predetermined lateral direction from neutral.

When the components of the tire sensor position detection system 100 identify a right hand turn, a right rear tire sensor can indicate an average, median, maximum, minimum or other statistical measure over a duration of a right hand turn, shows a change in wheel vertical load ΔF_{z} that is decreased relative to an overall statistical measure or a "straight driving" statistical measure of wheel vertical load or change in wheel vertical load; also during a right hand turn, a statistical measure of the lateral force F_{y} can be identified to be in a predetermined lateral direction from neutral that is opposite of the predetermined lateral direction for the left hand turn.

These can be analyzed in a number of ways to identify that the tire is a right rear tire. The components of the tire sensor position detection system 100 can identify that a statistical measure such as average position (or another measure) of the two dimensional plot of change in wheel vertical load vs lateral load corresponds to an upper left quadrant for a left hand turn; but the two dimensional plot of change in wheel vertical load vs lateral load corresponds to a lower right quadrant for a right hand turn.

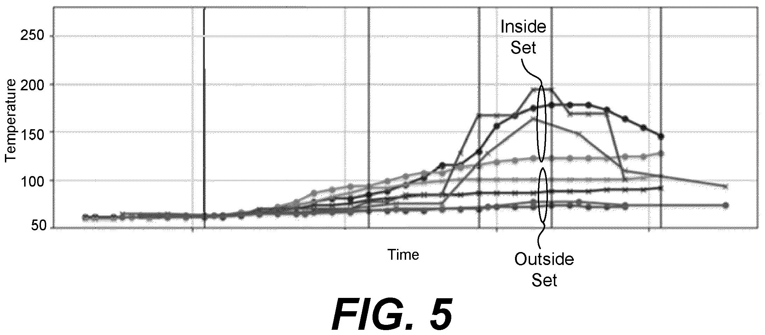

FIG. 5 Illustrates a set of temperature values detected by tire sensor devices 103 on a vehicle with dual tires on each side of an axle. This data can be used by the tire sensor position detection system 100 to determine whether a particular tire sensor device 103 corresponds to an inside tire or an outside tire. As can be seen in the figure, there can be eight temperature plots corresponding to eight tire sensor devices 103 for eight tires of a tandem set of axles 200 that have dual tires on each side of each axle. The components of the tire sensor position detection system 100 can identify a peak temperature, such as a peak average, median or other statistical measure of temperature across all of the tire sensor devices 103. At this point in time, the tire sensor devices 103 that have the hotter temperatures can correspond to the inside set of inside or inner tires. The tire sensor devices 103 that have the lower temperatures can correspond to the outside set of outside or outer tires.

The vehicle 101 can include a known number of tires such as four tires in a single axle dual tire vehicle configuration, eight tires in a dual axle dual tire vehicle configuration, twelve tires in a triple axle dual tire vehicle configuration, and so on. The components of the tire sensor position detection system 100 can identify that a set of half (e.g., two, four, six, etc.) of the tire sensor devices 103 corresponding to the lower temperatures in the total set are to be associated with outer tires. A dual tire setup for an axle can indicate that the axle has dual tires on each side of the axle.

The components of the tire sensor position detection system 100 can identify that a set of half (e.g., two, four, six, etc.) of the tire sensor devices 103 corresponding to the higher temperatures in the total set are to be associated with inner tires. This data can be combined with the determination of front, middle, or rear axle as described earlier in order to identify the full tire position for each of the tire sensor devices 103.

While rule-based systems of thresholds can be used, the parameters discussed can also be provided as inputs into a machine learning algorithm or process that can be trained using training set data that is captured for many vehicles 101 of each vehicle configuration; for training set data, the tire sensor device 103 positions are known and confirmed, and can serve to train a machine learning process.

Machine learning processes of the tire sensor position detection system 100. Machine learning processes can include naive bayes, decision tree, support vector, random forest, K-nearest neighbors, and other types of algorithms. Classification type processes can include training using a training dataset, and then the trained machine learning process can be deployed to categorize a set of data received from a particular set of tire sensor devices 103 known to be deployed and assigned to a particular vehicle 101 with a predetermined vehicle configuration. Input parameters can include all or a subset of the parameters detected by the tire sensor devices 103, as well as identifiers or flag parameters corresponding to the number or count of tire sensor devices 103, the predetermined vehicle configuration, or particular datapoints from the predetermined vehicle configuration.

Whether the tire sensor position detection system 100 uses rule-based or machine learning classification processes, the subset of parameters used as inputs to identify axle positions and vehicle side can include tire lateral and vertical force or acceleration values over time, and position data for the overall vehicle, among other values discussed. If the vehicle has dual tires on each side of each axle, tire temperature data can also be provided. Parameter values can be provided with timestamps. In some examples, axle positions and vehicle side positions for tire sensor devices 103 can be identified with one process, and this output data can be provided as inputs to a second process that identifies whether individual tire sensor devices 103 correspond to inner or outer positions. Alternatively, a first process can identify whether the tire sensor devices 103 correspond to inner or outer tire positions, and this output data can be provided as inputs to a second process that identifies axle positions and vehicle side positions for tire sensor devices 103.

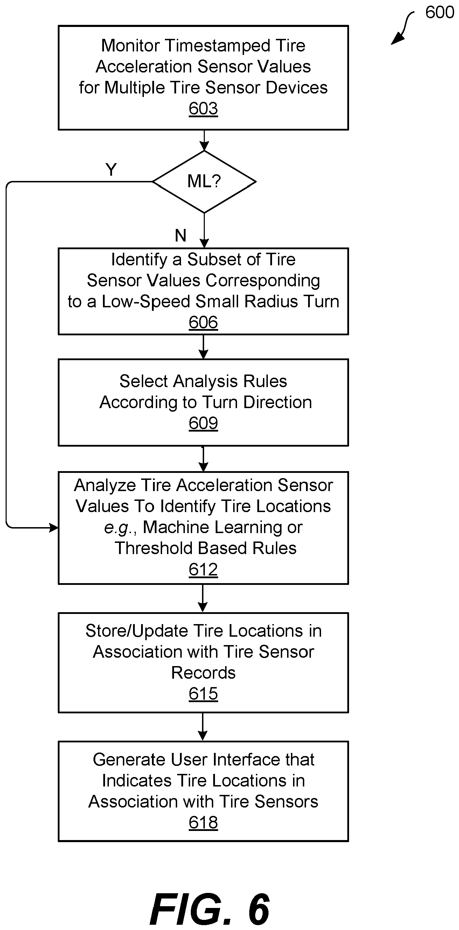

FIG. 6 shows a flowchart 600 that describes functionalities performed by the executable instructions of components of the tire sensor position detection system 100. Specifically, the flowchart 600 shows steps that describe how the tire sensor position detection system 100 can determine axle position and vehicle side for each of a set of tire sensor devices 103. While the steps are described as being performed by the tire sensor position detection system 100, the steps can be performed using devices deployed on vehicles 101, the server environment 109, or elsewhere in the overall system.

In step 603, the tire sensor position detection system 100 can monitor timestamped sensor values for multiple tire sensor devices 103. The tire sensor position detection system 100 can identify a set of tire sensor devices 103 that are assigned and deployed to a particular vehicle 101. The tire sensor position detection system 100 can identify a vehicle configuration for the vehicle 101. The tire sensor position detection system 100 can receive and store the timestamped sensor values for a predetermined threshold amount of time, or according to another rule associated with a tire position classification process.

The tire sensor position detection system 100 can identify axle positions and vehicle side positions for tire sensor devices 103 using tire lateral and vertical force or other acceleration based values over time, and position data for the overall vehicle 101, among other values discussed. If the tire position classification process uses a set of predetermined threshold based rules, then the tire sensor position detection system 100 can move to step 606. If the tire position classification process is a machine learning process, then the tire sensor position detection system 100 can move to step 612.

In step 606, the tire sensor position detection system 100 can identify a subset of tire sensor values corresponding to a low speed and/or small radius turn. This can include identification of a turn direction for the low speed small radius turn. The tire sensor position detection system 100 can use a GNSS or GPS sensor or other position detection sensors for the overall vehicle 101 in order to identify a threshold speed and/or a threshold turning radius has occurred. The tire sensor position detection system 100 can then filter the timestamped sensor values to be limited to a time duration or time window corresponding to the low speed small radius turn. The sensor values can be those for lateral acceleration parameters and vertical acceleration parameters detected by the set of tire sensor devices 103 for the vehicle 101.

In step 609, the tire sensor position detection system 100 can select a set of rules by which to analyze the sensor values for lateral acceleration parameters and vertical acceleration parameters. The tire sensor position detection system 100 can select these rules according to the turn direction that is identified. The selected rules can correspond to the rules and principles described in FIGS. 2A, 2B, 3A, 3B, 4A, and 4B.

In step 612, the tire sensor position detection system 100 can analyze the tire acceleration sensor values along with other values in order to identify tire positions. The tire sensor position detection system 100 can take inputs including using tire lateral and vertical force or other acceleration based values over time, as well as position data for the overall vehicle 101 over time, and can input these values into a tire position classification process. The tire position classification process can output respective tire position data for each tire sensor device 103. The tire position classification process can be a trained machine learning process or a process that uses predefined threshold-based rules to identify respective tire position data for each tire sensor device 103.

The tire position data from the acceleration sensor values can indicate axle position (e.g., front, middle, rear) as well as vehicle side (e.g., left right). This tire position data can represent a full tire position corresponding to a tire slot 123 for a tire sensor device 103 if there is a single tire on each side of the axle. However, the tire sensor position detection system 100 can alternatively use the tire position data to limit tire position to a subset of tire slot 123 that correspond to axle position and vehicle side for that tire sensor device 103. Flags for each type of position data can be used in addition to, or as an alternative to, specific assignment of a tire slot 123.

Temperature data can be used to identify inner or outer position using another classification process, which can be machine learning or rules and thresholds based as discussed. In the case of machine learning, the temperature data can be used in a single process or in a subsequent process to identify inner or outer position flags and exact tire slot 123, among the various examples.

In step 615, the tire sensor position detection system 100 can store or update tire position data. This can include flags, tags, terms and tire slot 123 assignments. The tire sensor position detection system 100 can register and track records for the tire sensor devices 103. The set of tire sensor devices 103 can be registered and pre-associated with a particular enterprise as well as the vehicle 101. The vehicle 101 can have an associated vehicle configuration can indicate information about the vehicle 101. The tire sensor position detection system 100 can store or update flags and tire slots 123 for each tire sensor device 103.

In step 618, the tire sensor position detection system 100 can generate a user interface that indicates the tire position data in association with identifiers for tire sensor devices 103. This can show visual representations of flags, tags, terms, tire slot 123 assignments, and visual diagrams (e.g., inset FIG. 1) that describe the position of the tire sensor devices 103 and identify the tire sensor devices 103 with respective identifiers. Steps of the flowchart 600 can be performed on demand in response to a user selection of a user interface element, receiving an indication that the tires have been rotated or changed, upon an indication that an additional tire sensor device 103 is newly associated with a vehicle 101, periodically, or on a predetermined schedule.

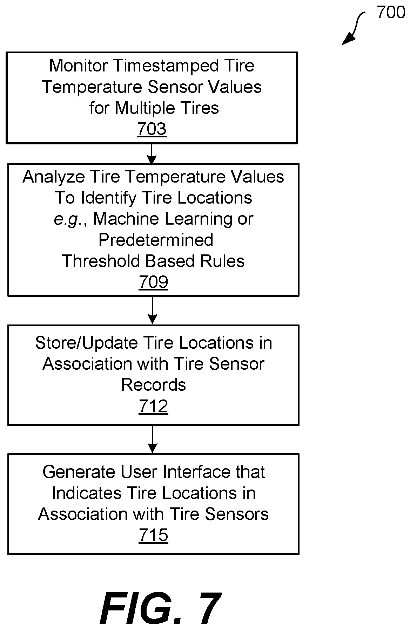

FIG. 7 shows a flowchart 700 that describes functionalities performed by the executable instructions of components of the tire sensor position detection system 100. Specifically, the flowchart 700 shows steps that describe how the tire sensor position detection system 100 can determine inner or outer tire positions for each of a set of tire sensor devices 103. While the steps are described as being performed by the tire sensor position detection system 100, the steps can be performed using devices deployed on vehicles 101, the server environment 109, or elsewhere in the overall system.

In step 703, the tire sensor position detection system 100 can monitor timestamped sensor values for multiple tire sensor devices 103. The sensor values used for determining and assigning inner or outer tire positions can correspond to temperature and pressure, among other parameters. The tire sensor position detection system 100 can identify a set of tire sensor devices 103 that are assigned and deployed to a particular vehicle 101. The tire sensor position detection system 100 can identify a vehicle configuration for the vehicle 101.

The tire sensor position detection system 100 can receive and store the timestamped sensor values over a predetermined threshold duration of time, or according to another rule for a tire classification process. For example, the rules can specify that the vehicle 101 has operated over a threshold vehicle speed for a threshold time period. This can ensure that the heat in the tires is sufficient for the following analysis. The rules can additionally or alternatively require that the temperature sensor values include at least one sensor that exceeds a minimum threshold temperature; or that an average, median, or other statistical measure for the temperatures for the set of tire sensor devices exceeds a temperature threshold at a particular time (or over a threshold duration of time). Vehicle speed can be determined using a vehicle sensor device that includes a vehicle position sensor.

In step 709, the tire sensor position detection system 100 can analyze the tire temperature values along with other values in order to identify tire position data. The tire sensor position detection system 100 can monitor the temperature values over time and can provide them as inputs into a tire position classification process. The tire position classification process can take inputs including temperature values over time and can output respective tire position data for each tire sensor device 103. The tire position classification process can be a trained machine learning process or a process that uses predefined threshold-based rules to identify respective tire position data for each tire sensor device 103.

The tire position data from the temperature sensor values can indicate inner or outer position. The tire sensor position detection system 100 can use the tire position data to limit tire position to a subset of tire slot 123 that correspond to inner or outer position for that tire sensor device 103. Flags or tags for each type of position data can be used in addition to, or as an alternative to, specific assignment of a tire slot 123. In some cases, the tire position data can be merged with other tire position data (for example, that identified according to the flowchart 600). This can result in specific assignment of an exact tire position or specific tire slot 123 for a multi axle, dual tire vehicle configuration.

In step 712, the tire sensor position detection system 100 can store or update tire position data. This can include flags, tags, terms and tire slot 123 assignments. The tire sensor position detection system 100 can register and track records for the tire sensor devices 103. The set of tire sensor devices 103 can be registered and pre-associated with a particular enterprise as well as the vehicle 101. The vehicle 101 can have an associated vehicle configuration can indicate information about the vehicle 101. The tire sensor position detection system 100 can store or update flags and tire slots 123 for each tire sensor device 103.

In step 715, the tire sensor position detection system 100 can generate a user interface that indicates the tire position data in association with identifiers for tire sensor devices 103. This can show visual representations of flags, tags, terms, tire slot 123 assignments, and visual diagrams (e.g., inset FIG. 1) that describe the position of the tire sensor devices 103 and identify the tire sensor devices 103 with respective identifiers. Steps of the flowchart 700 can be performed on demand in response to a user selection of a user interface element, receiving an indication that the tires have been rotated or changed, upon an indication that an additional tire sensor device 103 is newly associated with a vehicle 101, periodically, or on a predetermined schedule.

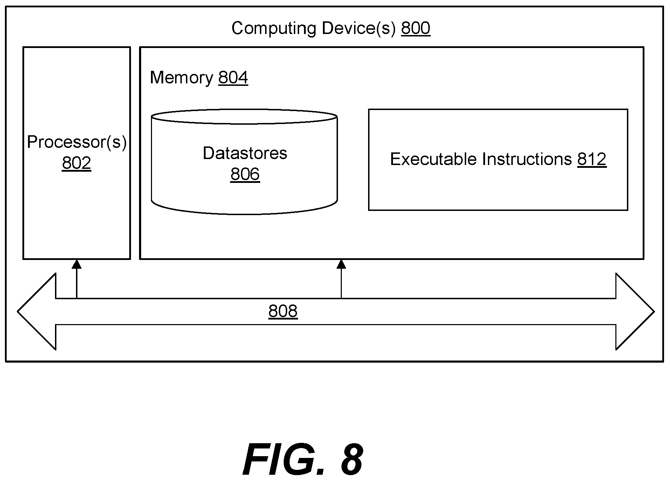

FIG. 8 illustrates an example computing device 800 used for any of the computational devices of the tire sensor position detection system 100. This can include computing devices 800 corresponding to a vehicle 101, an edge device 106, the server environment 109, and user devices that access the vehicle management service 120. The computing device 800 includes at least one processing system, for example, having a processor 802 and a memory 804, both of which are electrically and communicatively coupled to a local interface 808. The local interface 808 can be embodied as a data bus with an accompanying address/control bus or other addressing, control, and/or command lines, for data communications and addressing between the processor 802, the memory 804, and the executable instructions 812. Executable instructions 812 of a computing device 800 can include a vehicle management service 120, a machine learning based tire position classification process, a rule and or threshold based tire position classification process, and so on.

In various embodiments, the memory 804 stores data 806 in datastores and other software or executable-code components executable by the processor 802. The datastores 806 can include data related to the operation of the tire sensor position detection system 100, and other data. Among others, the executable-code components of various computing devices 800 can include components associated with any of the functions described for the tire sensor position detection system 100, and an operating system for execution by the processor 802. Where any component discussed herein is implemented in the form of software, any one of a number of programming languages can be employed such as, for example, C, C++, C#, Objective C, JAVA^{®}, JAVASCRIPT^{®}, Perl, PHP, VISUAL BASIC^{®}, PYTHON^{®}, RUBY, FLASH^{®}, or other programming languages.

The memory 804 stores software for execution by the processor 802. In this respect, the terms "executable" or "for execution" refer to software forms that can ultimately be run or executed by the processor 802, whether in source, object, machine, or other form. Examples of executable programs include, for example, a compiled program that can be translated into a machine code format and loaded into a random access portion of the memory 804 and executed by the processor 802, source code that can be expressed in an object code format and loaded into a random access portion of the memory 804 and executed by the processor 802, or source code that can be interpreted by another executable program to generate instructions in a random access portion of the memory 804 and executed by the processor 802, etc.

In various embodiments, the memory 804 can include both volatile and nonvolatile memory and data storage components. Volatile components are those that do not retain data values upon loss of power. Nonvolatile components are those that retain data upon a loss of power. Thus, the memory 804 can include, a random access memory (RAM), read-only memory (ROM), magnetic or other hard disk drive, solid-state, semiconductor, universal serial bus (USB) flash drive, memory card, optical disc (e.g., compact disc (CD) or digital versatile disc (DVD)), floppy disk, magnetic tape, or any combination thereof. In addition, the RAM can include, for example, a static random access memory (SRAM), dynamic random access memory (DRAM), or magnetic random access memory (MRAM), and/or other similar memory device. The ROM can include, for example, a programmable read-only memory (PROM), erasable programmable read-only memory (EPROM), electrically erasable programmable read-only memory (EEPROM), or other similar memory device. An executable program can be stored in any portion or component of the memory 804.

The processor 802 can be embodied as one or more microprocessors, one or more discrete logic circuits having logic gates for implementing various logic functions, application specific integrated circuits (ASICs) having appropriate logic gates, and/or programmable logic devices (e.g., field-programmable gate array (FPGAs), and complex programmable logic devices (CPLDs)).

If embodied in software, the executable instructions 812 can represent one or more module or group of code that includes program instructions to implement the specified logical function(s) discussed herein. The program instructions can be embodied in the form of source code that includes human-readable statements written in a programming language or machine code that includes machine instructions recognizable by a suitable execution system, such as a processor in a computer system or other system. Thus, the processor 802 can be directed by execution of the program instructions to perform certain processes, such as those illustrated in the flowcharts described herein. In the context of the present disclosure, a non-transitory computer-readable medium can be any tangible medium that can contain, store, or maintain any logic, application, software, or executable-code component described herein for use by or in connection with an instruction execution system.

Also, one or more of the components described herein that include software or program instructions can be embodied in a non-transitory computer-readable medium for use by or in connection with an instruction execution system, such as the processor 802. The computer-readable medium can contain, store, and/or maintain the software or program instructions for execution by or in connection with the instruction execution system. The computer-readable medium can include a physical media, such as, magnetic, optical, semiconductor, and/or other suitable media or drives. Further, any logic or component described herein can be implemented and structured in a variety of ways. For example, one or more components described can be implemented as modules or components of a single application. Further, one or more components described herein can be executed in one computing device or by using multiple computing devices.

The flowcharts or process diagrams can be representative of certain methods or processes, functionalities, and operations of the embodiments discussed herein. Each block can represent one or a combination of steps or executions in a process. Alternatively or additionally, each block can represent a module, segment, or portion of code that includes program instructions to implement the specified logical function(s). The program instructions can be embodied in the form of source code that includes human-readable statements written in a programming language or machine code that includes numerical instructions recognizable by a suitable execution system such as the processor 802. The machine code can be converted from the source code, etc. Further, each block can represent, or be connected with, a circuit or a number of interconnected circuits to implement a certain logical function or process step.

Although the flowcharts illustrate a specific order, it is understood that the order can differ from that which is depicted. For example, an order of execution of two or more blocks can be scrambled relative to the order shown. Also, two or more blocks shown in succession can be executed concurrently or with partial concurrence. Further, in some embodiments, one or more of the blocks can be skipped or omitted. In addition, any number of counters, state variables, warning semaphores, or messages might be added to the logical flow described herein, for purposes of enhanced utility, accounting, performance measurement, or providing troubleshooting aids, etc. Such variations, as understood for implementing the process consistent with the concepts described herein, are within the scope of the embodiments.

## Claims

1. A system comprising:
at least one computing device comprising at least one processor; and
at least one memory comprising instructions, when executed, cause the at least one computing device to at least:
receive, by a vehicle management service, timestamped tire acceleration values for a set of tire sensor devices that are assigned to a vehicle that is managed by a vehicle management service, wherein a respective tire sensor device provides a tire-specific subset of the timestamped tire acceleration values;
identify, by the vehicle management service, at least one vehicle configuration parameter that defines a number of rear axles and a number of tires or wheels on each side of a respective axle;
input, by the vehicle management service, the at least one vehicle configuration parameter and the timestamped tire acceleration values into a tire position classification process; and
assign, by the vehicle management service, an axle position and a vehicle side position to the respective tire sensor device based at least in part on an output from the tire position classification process.

2. The system of claim 1, wherein the tire-specific subset of the timestamped tire acceleration values comprises: a plurality of vertical acceleration values, and a plurality of lateral acceleration values for the respective tire sensor device.

3. The system of claim 1 or 2, wherein the instructions, when executed, cause the at least one computing device to at least generate a user interface that displays the axle position and the vehicle side position in association with the respective tire sensor device; and/or wherein the instructions, when executed, cause the at least one computing device to at least receive vehicle position sensor values for the vehicle and identify, based at least in part on the vehicle position sensor values, a time period associated with a turn, preferably at least one of a low speed turn and a small radius turn, wherein the timestamped tire acceleration values correspond to the turn based at least in part on the time period.

4. The system of at least one of the previous claims, wherein the tire position classification process comprises a machine learning process or a process comprising threshold-based rules.

5. The system of at least one of the previous claims, wherein the instructions, when executed, cause the at least one computing device to at least receive timestamped vehicle position sensor values for the vehicle, wherein the timestamped vehicle position sensor values are provided as inputs to the tire position classification process along with the at least one vehicle configuration parameter and the timestamped tire acceleration values.

6. A method comprising:
receiving, by a vehicle management service executed by at least one computing device, timestamped tire acceleration values for a set of tire sensor devices that are assigned to a vehicle that is managed by a vehicle management service, wherein a respective tire sensor device provides a tire-specific subset of the timestamped tire acceleration values;
identifying, by the vehicle management service, at least one vehicle configuration parameter that defines a number of rear axles and a number of tires or wheels on each side of a respective axle;
inputting, by the vehicle management service, the at least one vehicle configuration parameter and the timestamped tire acceleration values into a tire position classification process; and
assigning, by the vehicle management service, an axle position and a vehicle side position to the respective tire sensor device based at least in part on an output from the tire position classification process.

7. The method of claim 6, wherein the tire-specific subset of the timestamped tire acceleration values comprises: a plurality of vertical acceleration values, and a plurality of lateral acceleration values for the respective tire sensor device.

8. The method of claim 6 or 7, further comprising (i) generating a user interface that displays the axle position and the vehicle side position in association with the respective tire sensor device; and/or (ii) receiving vehicle position sensor values for the vehicle and identifying, based at least in part on the vehicle position sensor values, a time period associated with a turn, preferably at least one of a low speed turn and a small radius turn, wherein the timestamped tire acceleration values correspond to the turn based at least in part on the time period.

9. The method of at least one of the claims 6 to 8, wherein the tire position classification process comprises a machine learning process or a process comprising threshold-based rules.

10. The method of at least one of the claims 6 to 9, further comprising:
receiving timestamped vehicle position sensor values for the vehicle, wherein the timestamped vehicle position sensor values are provided as inputs to the tire position classification process along with the at least one vehicle configuration parameter and the timestamped tire acceleration values.

11. A computer readable, preferably non-transitory medium, the medium comprising instructions executable by at least one computing device, the instructions, when executed by the at least one computing device, causing the at least one computing device to at least:
receive, by a vehicle management service, timestamped tire acceleration values for a set of tire sensor devices that are assigned to a vehicle that is managed by a vehicle management service, wherein a respective tire sensor device provides a tire-specific subset of the timestamped tire acceleration values;
identify, by the vehicle management service, at least one vehicle configuration parameter that defines a number of rear axles and a number of tires or wheels on each side of a respective axle;
input, by the vehicle management service, the at least one vehicle configuration parameter and the timestamped tire acceleration values into a tire position classification process; and
assign, by the vehicle management service, an axle position and a vehicle side position to the respective tire sensor device based at least in part on an output from the tire position classification process.

12. The medium of claim 11, wherein the tire-specific subset of the timestamped tire acceleration values comprises: a plurality of vertical acceleration values, and a plurality of lateral acceleration values for the respective tire sensor device.

13. The medium of claim 11 or 12, wherein the instructions, when executed, cause the at least one computing device to at least generate a user interface that displays the axle position and the vehicle side position in association with the respective tire sensor device; and/or wherein the instructions, when executed, cause the at least one computing device to at least receive vehicle position sensor values for the vehicle and identify, based at least in part on the vehicle position sensor values, a time period associated with a turn, wherein the timestamped tire acceleration values correspond to the turn based at least in part on the time period.

14. The medium of at least one of the claims 11 to 13, wherein the tire position classification process comprises a machine learning process or a process comprising threshold-based rules.

15. The medium of at least one of the claims 11 to 14, wherein the instructions, when executed, cause the at least one computing device to at least: receive timestamped vehicle position sensor values for the vehicle, wherein the timestamped vehicle position sensor values are provided as inputs to the tire position classification process along with the at least one vehicle configuration parameter and the timestamped tire acceleration values.
